# EUROPÄISCHE PATENTSCHRIFT

(11) **EP 1 977 870 B1**
(45) Veröffentlichungstag und Bekanntmachung des Hinweises auf die Patenterteilung: **08.08.2012**
(21) Anmeldenummer: 08006217.7
(22) Anmeldetag: 30.03.2008
(51) Int. Cl.: B27M 3/00, B25H 1/00, B25B 23/08, B23B 47/28

(54) **Hilfsvorrichtung für das Verbinden von zwei Holzbalken mittels Schrauben**
Aid for connecting two wooden planks with screws
Dispositif d'aide pour relier deux poutres en bois à l'aide de vis

(30) Priorität: 04.04.2007 AT 5292007
(43) Veröffentlichungstag der Anmeldung: 08.10.2008
(73) Patentinhaber: Simmer, Jane-Beryl, 4810 Gmunden (AT)
(72) Erfinder: Bässler, Uwe, 4810 Gmunden (DE)
(74) Vertreter: Babeluk, Michael

(56) Entgegenhaltungen:
- EP-A- 1 595 627
- EP-A- 2 082 841
- US-A- 4 793 747
- US-A1- 2003 221 391

## Beschreibung

Die Erfindung betrifft eine Hilfsvorrichtung für das Verbinden von zwei Holzbalken mittels Schrauben, wobei Schrauben an einer an die Stoßfläche zwischen den beiden zu verbindenden Holzbalken angrenzenden Mantelfläche der Balken angesetzt und in einem spitzen Winkel zur Stoßfläche durch diese geführt werden.

Die Gebrauchsmusterschrift DE 200 02 567 U1 beschreibt ein Montagegerät zum Setzen von Schrauben beim Verbinden von einander an ihren Enden überlappenden Holzbalken. An einem zwei parallel zueinander angeordneten Schraubenzwingen ähnlichem Grundgestell sind verschiebbar und feststellbar Tragteile angeordnet, welche jeweils mit einer oder mehreren, eine Führung für die einzudrehende Schraube bildenden Hülse versehen sind. Nachteilig ist, dass dieses Montagegerät relativ groß und schwer ist, und dass es nur die Fixierung von parallel aneinander anliegenden Holzbalken unterstützt.

Eine bekannte Vorrichtung zum Herstellen einer T-Verbindung aus einem durchgehenden Hauptträger und einem mit seiner Stirnfläche daran anstoßenden Nebenträger besteht aus zwei Metallwinkeln, welche nebeneinander parallel zueinander angeordnet auf dem Hauptträger befestigt werden und an der Seite, an welcher der Nebenträger befestigt werden soll einstellbar durch ein Querstück miteinander verbunden sind. Der Nebenträger wird an dem passend eingestellten Querstück aufgelegt. Zum Setzen der Schrauben wir eine Setzlehre in Form eines flachen, rechteckförmigen Teiles verwendet, der durch schräg verlaufende Bohrungen durchbrochen ist. Mit Hilfe einer seitlich angebrachten Skala, auf der die Schraubenlängen vermerkt sind, kann er passend am Rand der Stoßfläche auf zueinander fluchtende Teile der Mantelflächen beider Balken aufgesetzt werden, sodass durch die schräg verlaufenden Bohrungen Richtung und Ort der anzusetzenden Schrauben bestimmt sind. Zu kritisieren ist das Gewicht und die Sperrigkeit der Vorrichtung, sowie die Tatsache, dass sie nur für T-Verbindungen anwendbar ist.

*Die* EP 1 595 627 A2 *zeigt eine aus zwei Teilen bestehende Hilfsvorrichtung die das Verbinden von zwei Holzbalken mittels Schrauben, wobei Schrauben an einer an die Stoßfläche zwischen den beiden zu verbindenden Holzbalken angrenzenden Mantelfläche der Balken angesetzt und in einem spitzen Winkel zur Stoßfläche durch diese geführt werden, unterstützt, indem sie eine Führung für die spitzwinkella zur Oberfläche anzusetzenden Schraubendurchgangsbohrungen in einem der beiden Balken bietet. Ein Teil der Hiffsvorrichtung ist an einer Kante eines Balkens oder im Winkel zwischen rechtwinkelig aneinander angrenzenden Mantelflächen zweier zu verbindender Balken ansetzbar. Der zweite Teil der Hilfsvorrichtung ist in unterschledlichen Positionen auf dem ernsten Teil fixierbar. Im Fall der Verbindung von Balken mittels Schrauben, welche an einer solchen Fläche des ersten Balkens angesetzt werden müssen, welche an der Stoßfläche des damit zu verbindenden Balkens mit einer Fläche des zweiten Balkens fluchtet, kann die Hilfsvorrichtung nicht für das Führen der Schrauben verwendet sondern nur für das Vorbohren von Schraubendurchganoshohrungen, da bei richtig angesetzter Hilfsvorrichtung ein Teil von ihr in den Raum ragt, welcher nach hergestellter Verbindung durch den zweiten Balken eingenommen wird._In diesem Anwendungsfall kann die Hilfsvorrichtung auch keine Führung für die richtige Vor-Positionierung der beiden Balken aneinander bieten. Da damit das Verbinden von Balken in einem wichtigen und häufig auftretenden Anwendungsfall kaum unterstützt wird hat sich diese Hilfsvorrichtung auf den Markt nicht durchgesetzt*

*Die* US 2003/221391 A1 *zeigt eine ebenfalls zweiteilige Hilfsvorrichtung für das Bohren von Schraubendurchgangsbohrungen. Die Hilfsvorrichtung unterstützt das Befestigen von Bohlen, typischerwelse Bodenbohlen, mittels Schrauben an einer Unterkonstruktion. Die Hilfsvorrichtung wird dazu an zwei benachbarten Bohlen und nicht ausschließlich an den unmittelbar zu verbindenden Teilen Bohle und Unterkonstruktion angelegt.*

*Die* US 793 747 A *zeigt eine weitere zeiteilige Hilfsvorrichtung. für das Bohren eines Loches in einen Körper, wobei die Bohrung in einem einstellbaren Winkel spitzwinkelig zur anzubohrenden Oberfläche des Körpers angesetzt werden kann. Es wird keinerlei Führung für das Positionieren eines weiteren Körpers geboten der an dem ersten Körper festgeschraubt werden soll.*

Der Erfinder hat sich die Aufgabe gestellt, eine Hilfsvorrichtung zum Herstellung jener Verbindungen zwischen zwei Holzbalken zur Verfügung zu stellen, bei denen Schrauben an einer an die Stoßfläche zwischen den beiden zu verbindenden Holzbalken angrenzenden Mantelfläche der Balken angesetzt und in einem spitzen Winkel zur Stoßfläche durch diese geführt werden. Gegenüber den bekannten Vorrichtungen soll die zu schaffende Hilfsvorrichtung kleiner und leichter sein, und sie soll das Verbinden sowohl von T-förmig aneinander liegenden Balken, als auch von parallel aneinander liegenden Balken unterstützen.

Zum Lösen der Aufgabe wird eine Hilfsvorrichtung vorgeschlagen, welche aus einem Verbindungsteil und einem Lehrenteil besteht. Der Verbindungsteil dient der behelfsmäßigen Herstellung und Sicherung der richtigen Lage der Holzbalken zueinander, und er unterstützt das richtige Ansetzen des Lehrenteils. Der Verbindungsteil wird bestimmungsgemäß vorübergehend mittels Schrauben mit mindestens einem der beiden Balken verbunden und er liegt dabei mit einer ebenen Fläche an einem solchen Paar von Mantelflächenbereichen beider Balken an, bei dem beide Teile an die Stoßfläche zwischen den beiden Balken angrenzen und zueinander fluchten. Der Lehrenteil ist mit Führungshülsen für die zu setzenden Verbindungsschrauben ausgestattet. Der Lehrenteil ist am Verbindungsteil zwecks Anpassung an die Länge der verwendeten Verbindungsschrauben in unterschiedlichen, definierten Lagen fixierbar.

Die Erfindung wird anhand der Zeichnungen näher erläutert:

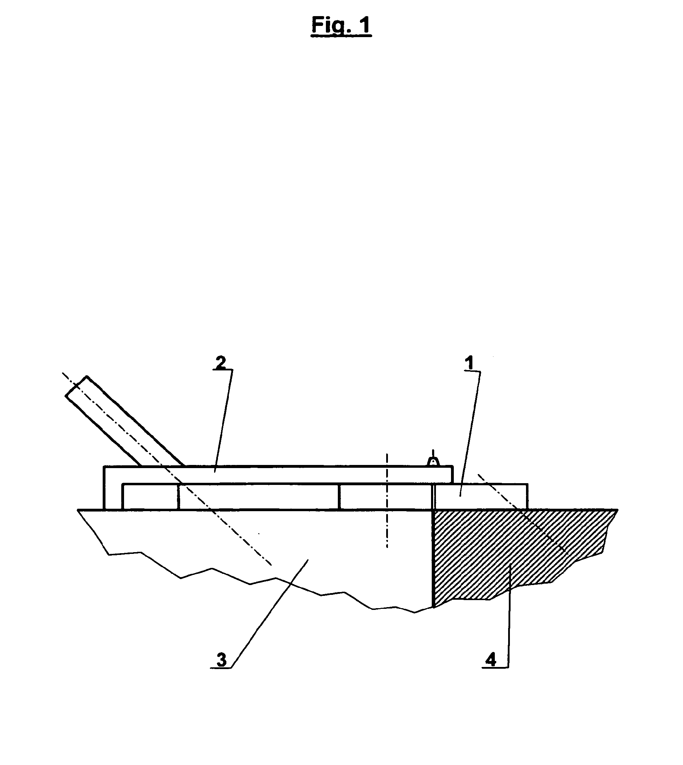

- Fig. 1 :: zeigt eine Teilschnittansicht auf eine erfindungsgemäß hergestellte T-Verbindung während der Montage. Die Blickrichtung liegt dabei parallel zur Längsrichtung des durchgehenden - hier geschnitten dargestellten - Hauptträgers.

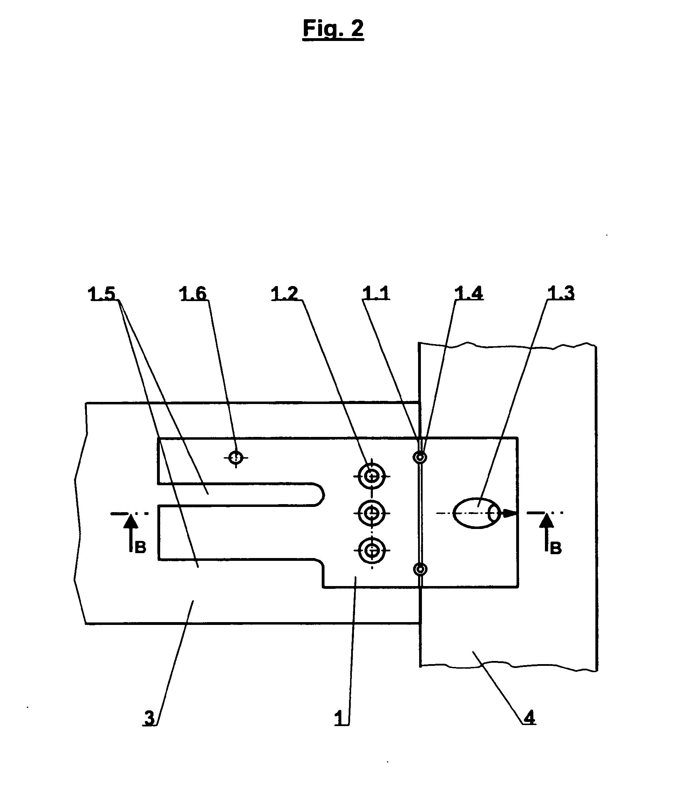

- Fig. 2:: zeigt eine Sicht von oben auf den an den Balken montierten Verbindungsteil.

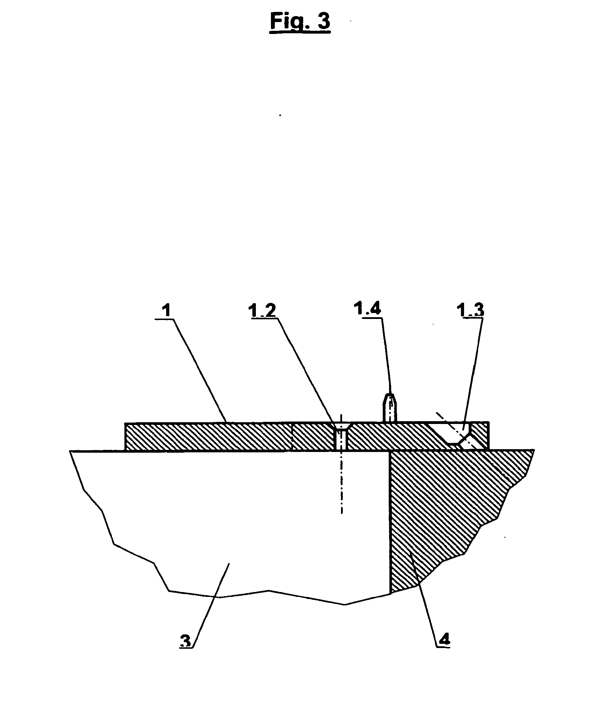

- Fig. 3:: zeigt die Anordnung von Fig. 2 in der vertikalen Schnittansicht ""B-B` gemäß Fig. 2.

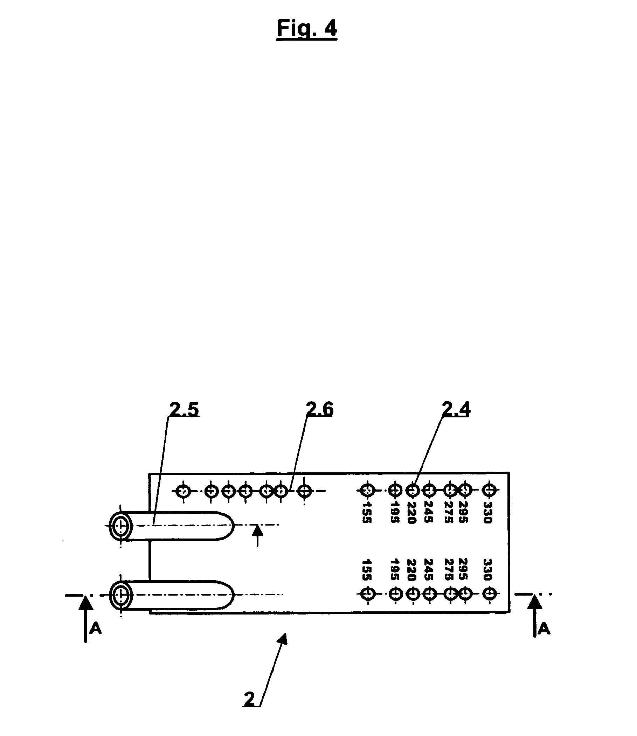

- Fig. 4:: zeigt den Lehrenteil von oben.

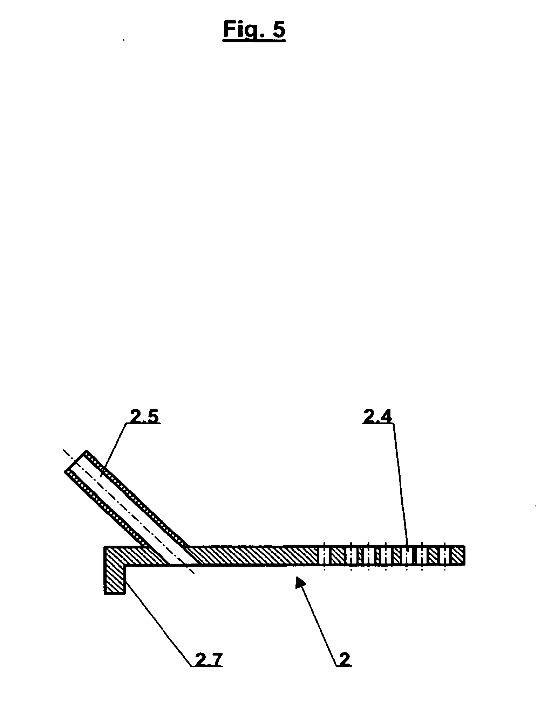

- Fig. 5:: zeigt den Lehrenteil in der vertikalen Schnittansicht "A-A" gemäß Fig. 4.

Die Erfindung wird an Hand des dargestellten Beispiels, nämlich der Herstellung einer T-Verbindung aus zwei Balken, erklärt. Mit dem Begriff "Nebenträger" ist dabei jener Holzbalken gemeint, welcher an der Verbindungsstelle endet. "Hauptträger" ist jener Holzbalken, welcher an der Verbindungsstelle nicht endet. "Stoßfläche" ist jene Fläche, an der die beiden Träger aneinander anliegen.

Bei der Montage wird zuerst der Verbindungsteil 1 am stoßflächenseitigen Ende jener Teilfläche der Mantellfläche des Nebenträgers 3 befestigt, welche nach dem Herstellen der Verbindung mit einer Teilfläche der Mantelfläche des Hauptträgers 4 fluchten soll. Das Befestigen am Nebenträger erfolgt mittels Holzschrauben, welche am Verbindungsteil nahe an der Kante zur Stoßfläche durch die angesenkten Bohrungen 1.2 verlaufen. Der Verbindungsteil 1 ist dabei so am Nebenträger befestigt, dass die, beispielsweise durch eine Kerbe gebildete, Linie 1.1, welche sich über die obere und die beiden seitlichen Flächen des Verbindungsteiles erstreckt, genau in der Ebene der Stoßfläche des Nebenträgers liegt. Der Verbindungsteil ragt dabei also mit etwa einem Drittel seiner parallel zur Richtung des Nebenträgers ausgerichteten Länge über den Nebenträger hinaus.

Im nächsten Arbeitsschritt werden der Nebenträger 3 und Hauptträger 4 an der gewünschten Stoßfläche aneinander gelegt und normal zur Ebene des Verbindungsteiles 1 so gerückt, dass der über den Nebenträger hinausragende Teil des Verbindungsteiles 1 an dem an die Stoßfläche angrenzenden Mantelflächenbereich des Hauptträgers zum Anliegen kommt. Damit werden die Mantelflächenbereiche am Hauptträger und am Nebenträger zueinander fluchtend eingerichtet. Bei Bedarf können Hauptträger und Nebenträger zueinander in die richtige Lage gerückt und dort behelfsmäßig fixiert werden, indem eine Holzschraube durch die in einem spitzen Winkel von der Seite des Nebenträgers zur Seite des Hauptträgers durch den Verbindungsteil 1 verlaufenden Bohrung *1.3* in den Hauptträger geschraubt wird.

Als nächstes wird der Lehrenteil 2 in passender Position auf den Verbindungsteil 1 aufgesetzt. Dazu dienen die beiden am Verbindungsteil von der den Balken abgewandten Seite an der Linie 1.1 empor stehenden dornartigen Fortsätze 1.4 und die am Lehrenteil angebrachten beiden Reihen von Bohrungen 2.4, welche mit Ziffern gekennzeichnet sind, welche die Länge der verwendeten Verbindungsschrauben bedeuten. Der Lehrenteil 2 wird dabei so auf den Verbindungsteil 1 aufgesetzt, dass die Fortsätze 1.4 des Verbindungsteils in die für die jeweilige Schraubenlänge gekennzeichneten Bohrungen 2.4 ragen. Die beiden dornartigen Fortsätze 1.4 sind in einem zur Stoßfläche parallel liegenden Abstand voneinander entfernt angeordnet. Die beiden Reihen von Bohrungen 2.4 sind im gleichen Abstand nebeneinander angeordnet. Daher kann der Lehrenteil in zwei gegeneinander um 180° verdrehten Lagen am Verbindungsteil aufgesetzt sein. Damit der Lehrenteil 2 an der von den Balken abgewandten Seite auf dem Verbindungsteil 1 aufliegt und nicht über die Kante des Verbindungsteils schaukeln kann, ist er an dem vom Verbindungsteil abgewandten Ende mit einem Auflagesteg 2.7 versehen, der von seiner am Verbindungsteil anliegenden Ebene auf den jeweiligen Balken hin ragt und dort anliegt.

Im nun folgenden Schritt werden die dauerhaft bleibenden Verbindungsschrauben zwischen den Balken eingeschraubt. Bei bestimmungsgemäß angesetztem Lehrenteil befinden sich die eine lange Bohrung beinhaltenden Führungshülsen 2.5 genau an der richtigen Position, sodass durch sie jeweils eine Verbindungsschraube angesetzt und eingeschraubt werden kann, sodass sie die beiden Balken miteinander verbindet. Der Innendurchmesser der Führungshülsen ist groß genug, dass in ihr nicht nur Gewinde und Schaft einer Verbindungsschraube Platz finden kann, sondern auch der Kopf einer Verbindungsschraube. Die erste der beiden möglichen Lagen des Lehrenteils am Verbindungsteil für eine bestimmte Schraubenlänge dient zum Ansetzen der Verbindungsschrauben vom ersten Balken in den zweiten Balken, die zweite Lage dient zum Ansetzen der Verbindungsschrauben vom zweiten Balken in den ersten. Damit sich die von unterschiedlichen Balken her eingeschraubten Verbindungsschrauben nicht an der Stoßfläche treffen, sind die Führungshülsen bezüglich der Symmetrieebene zwischen den beiden Reihen von Bohrungen 2.4 versetzt angeordnet. In jenen Flächenbereichen des Verbindungsteils, an denen bei bestimmungsgemäß angesetztem Lehrenteil die balkenseitigen Enden der Führungshülsen 2.5 münden können, ist der Verbindungsteil durch Ausnehmungen 1.5 unterbrochen. Dies betrifft bei der dargestellten Bauweise nur die Seite des Verbindungsteiles, welche am Nebenträger aufliegt.

Nachdem die Verbindungsschrauben zwischen den beiden Balken eingeschraubt wurden, wird erst der Lehrenteil 2 vom Verbindungsteil 1 abgenommen, dann werden die Schrauben mit denen der Verbindungsteil an den Balken befestigt ist herausgeschraubt und der Verbindungsteil abgenommen. Der Montagevorgang ist beendet.

Wenn die aus Verbindungsteil 1 und Lehrenteil 2 bestehende Hilfsvorrichtung nur dazu dienen soll, die richtige Position der Verbindungsschrauben zwischen den beiden Balken anzuzeigen und nicht dazu, diese Position auch unter Aufbringung von Kräften einzustellen, so ist es sinnvoll, Verbindungsteil 1 und Lehrenteil 2 in der für die jeweilige Schraubenlänge passenden Position aneinander so zu fixieren, dass sie gemeinsam wie ein einstückiges Werkzeug wirken. Dieses Fixieren kann am dargestellten Beispiel beispielsweise durch eine Schraube erreicht werden, welche von unten durch die Bohrung 1.6 am Verbindungsteil 1 und durch eine der Bohrungen der Bohrungsreihe 2.6 am Lehrenteil verläuft, und an der Oberseite des Lehrenteiles mit einer Mutter versehen ist.

Der wesentlichste Vorteil der Hilfsvorrichtung gegenüber bekannten Vorrichtungen für diesen Zweck liegt in der handlichen und sehr kostengünstigen Ausführung der einzelnen Teile. Diese können aus Metall, idealer noch aus Hartkunststoff hergestellt sein, wodurch sie ein relativ geringes Gewicht aufweisen und leicht vom Arbeiter mit sich getragen werden können.

Im Arbeitsablauf kann es durchaus sinnvoll sein, von den Verbindungsteilen 1 eine größere Anzahl anzuwenden als von den Lehrenteilen 2. Die Verbindungstelle 1 können dabei schon an einem Zwischenlagerplatz für die Balken unter komfortablen Arbeitsbedingungen an den Balken befestigt werden. Am Einbauort selbst brauchen die Arbeiter nur jeweils einen Lehrenteil 2 mitzuführen.

Die Erfindung wurde hier an Hand des Anwendungsbeispiels "symmetrische T-Verbindung" beschrieben. Wie man sich unschwer vorstellen kann, ist die erfindungsgemäße Hilfsvorrichtung in gleicher Weise immer dann nützlich einsetzbar, wenn zwei Balken mittels spitzwinkelig durch die Stoßflächen verlaufenden Schrauben miteinander verbunden werden sollen, wobei an einer Seite der Stoßfläche eine rechtwinkelig dazu angeordnete Mantelfläche eines Balkens mit einer angrenzenden Mantelfläche des anderen Balkens fluchtet.

Bei sehr breiten Balken sowie zum Verbinden von parallel aneinander anliegenden Balken ist oft eine sogenannte Serienverschraubung erforderlich, das heißt eine Verschraubung, bei der eine größere Anzahl als nur zwei Verbindungsschrauben in der schon beschriebenen Weise, nebeneinander angeordnet sind. Es ist vorteilhaft, den Achsabstand der beiden Führungshülsen 2.5 am Lehrenteil zueinander in der zur Kante zwischen Stoßfläche und Auflagefläche für den Verbindungsteil parallelen Richtung so auszuführen, dass er gleich der Hälfte der Breite des Verbindungsteiles 1 in dieser Richtung ist. Damit wird erreicht, dass dann, wenn zwecks Herstellung einer Serienverschraubung mehrere Verbindungsteile aneinander anliegend nebeneinander an einem Balken befestigt werden, und dann in beschriebener Weise dementsprechend die Verbindungsschrauben eingeschraubt werden, der Rasterabstand zwischen benachbarten Verbindungsschrauben immer der gleiche ist, unabhängig davon ob benachbarte Verbindungsschrauben vom gleichen Verbindungsteil aus oder von benachbarten Verbindungsteilen aus eingeschraubt werden.

## Patentansprüche

1. Hilfsvorrichtung zum Herstellung von Verbindungen zwischen zwei Holzbalken (3, 4) mittels spitzwinkelig durch die Stoßfläche verlaufenden Schrauben, wobei an einem ersten Holzbalken (3) ein an die Stoßfläche angrenzender ebener Oberflächenbereich mit einem angrenzenden ebenen Oberflächenbereich des zweiten Balkens (4) fluchtet, wobei die Hilfsvorrichtung aus einem Verbindungsteil (1) und einem davon trennbaren Lehrenteil (2), welcher zumindest eine Führungshülse (2.5) für die anzubringenden Verbindungsschrauben beinhaltet, aufgebaut ist, wobei der Verbindungsteil (1) an besagtem *fluchtenden* Oberflächenbereich am ersten Balken (3) mittels Schrauben in einer durch eine Kennzeichnung (1.1) am Verbindungsteil (1) bezüglich der Stoßfläche definierten Lage fixierbar ist und wobei der Lehrenteil (2) am Verbindungsteil (1) in Anpassung an die Länge der verwendeten Verbindungsschrauben in unterschiedlichen definierten Lagen fixierbar ist. **dadurch gekennzeichnet, dass**
der Verbindungsteil (1) dabei über die Stoßfläche hinausragt und mit dem hinausragenden Teil an besagtem *fluchtenden* Oberflächenbereich des zweiten Balkens (4) anliegt.

2. Hilfsvorrichtung nach Anspruch 1, **dadurch gekennzeichnet, dass** die Lage des Verbindungsteiles (1) an der Stoßfläche durch eine Linie (1.1) definiert ist, welche am Verbindungsteil angebracht ist und bei dieser definierten Lage in der Ebene der Stoßfläche verläuft.

3. Hilfsvorrichtung nach Anspruch 1 oder 2, **dadurch gekennzeichnet, dass** Verbindungsteil (1) und Lehrenteil (2) durch eine lösbare Steckverbindung miteinander verbindbar sind, wobei jeweils zwei Paare von komplementären Steckelementen (1.4, 2.4) zusammenwirken, welche in geschlossenem Zustand beide in der Ebene der Stoßfläche angeordnet sind.

4. Hilfsvorrichtung nach Anspruch 3, **dadurch gekennzeichnet, dass** eine Gruppe von gleichartigen Steckelementen (2.4) entlang einer Reihe hintereinander angeordnet ist, welche am Lehrenteil in zur Stoßfläche normaler Richtung verläuft.

5. Hilfsvorrichtung nach einem der bisherigen Ansprüche, **dadurch gekennzeichnet, dass** der vom ersten Balken (3) aus über den zweiten Balken (4) ragende Teil des Verbindungsteiles (1) mit einer Durchgangsbohrung (1.3) versehen ist, deren Verlängerung vom Verbindungsteil (1) weg im zweiten Balken (4) sowohl von der Oberfläche, an welcher der Verbindungsteil anliegt, als auch von der Stoßfläche weg verläuft.

6. Hilfsvorrichtung nach einem der bisherigen Ansprüche, **dadurch gekennzeichnet, dass** am Lehrenteil (2) zwei Führungshülsen (2.5) angebracht sind *und* dass der Achsabstand der beiden Führungshülsen (2.5) am Lehrenteil (2) zueinander *in iener Richtung, welche* zur Kante zwischen *den* Stoßflächen_der *Balken (3, 4)* und *der* Auflagefläche für den Verbindungsteil (1) *parallel liegt,* gleich der Hälfte der Breite des Verbindungsteiles (1) in dieser Richtung ist.

7. Hilfsvorrichtung nach Anspruch 6, **dadurch gekennzeichnet, dass** bei auf den Verbindungsteil (1) aufgesetztem Lehrenteil (2) *in jener Richtung, welche* zur Kante zwischen *den Stoßflächen der Balken (3, 4)* und *der* Auflagefläche für den Verbindungsteil (1) *parallel liegt,* der Abstand zwischen einer Seitenfläche des Verbindungsteiles (1) und der Achse einer Führungshülse (2.5) ein Achtel der Breite des Verbindungsteiles ist.

## Claims

1. Assembly aid for manufacturing connections between two wooden beams (3, 4) via screws inserted through the joining plane at acute angles, whereby a level surface zone on the first wooden beam (3) is aligned flush with an abutting level surface zone of the second beam (4), whereby the assembly aid is constructed out of a connecting part (1) and a separable template part (2) containing at least one guide sleeve (2.5) for fastening screws to be inserted, whereby the connection part (1) can be affixed to the aforementioned flush-aligned surface zone on the first beam (3) via screws in a position relative to the joining surface defined by a marking (1.1) on the connection part (1.1.), and whereby the template part (2) can be affixed to the connection part (1) in variously defined positions adapted to the length of the fastening screws used,
**characterised in that** the connection part (1) protrudes past the joining plane and this protruding part abuts the aforementioned flush-aligned surface zone of the second beam (4).

2. Assembly aid according to claim 1, **characterised in that** the position of the connection part (1) relative to the joining plane is defined by a line (1.1) that is applied to the connection part and lies within the joining plane in this defined position.

3. Assembly aid according to claim 1 or 2, **characterised in that** the connection part (1) and template part (2) can be connected together by a detachable plug-type connection, whereby two pairs of complementary plug elements (1.4, 2.4) interact in each position and both lie within the joining plane while connected.

4. Assembly aid according to claim 3, **characterised in that** identical plug elements (2.4) are grouped consecutively in a row running along the template part normal to the joining plane.

5. Assembly aid according to one of the above claims, **characterised in that** the portion of the connection part (1) protruding from the first beam (3) over the second beam (4) is provided with a through-hole (1.3), the extension of which runs from the connection part (1) into the second beam (4) away from both the surface against which the connection part abuts and from the joining plane.

6. Assembly aid according to one of the above claims, **characterised in that** two guide sleeves (2.5) are affixed to the template part (2) and the centre-to-centre distance between the two guide sleeves (2.5) on the template part (2) in the direction parallel to the edges of the beams (3, 4) lying within the joining plane and the resting surface for the connection part (1) is exactly half the width of the connection part (1) in this direction.

7. Assembly aid according to claim 6, **characterised in that** when the template part (2) is placed onto the connection part (1), the distance between one side surface of the connection part (1) and the axis of a guide sleeve (2.5) in the direction parallel to the edges of the beams (3, 4) lying within the joining plane and the resting surface for the connection part (1) is one-eighth the width of the connection part.

## Revendications

1. Dispositif auxiliaire servant à relier deux poutres en bois (3, 4) au moyen de vis qui traversent la surface d'about à angle aigu, une zone de surface plane d'une première poutre en bois (3) contiguë à la surface d'about étant alignée à une zone de surface plane contiguë de la deuxième poutre (4), le dispositif auxiliaire se composant d'un élément de liaison (1) et d'un élément de perçage (2) amovible par rapport à l'élément de liaison, contenant au moins une douille de guidage (2.5) pour les vis de liaison à monter, l'élément de liaison (1) pouvant être fixé sur ladite zone de surface alignée de la première poutre (3) au moyen des vis dans une position définie par un marquage (1.1) pratiqué par rapport à la surface d'about sur l'élément de liaison (1.1), et l'élément de perçage (2) pouvant être fixé dans des positions diverses définies sur l'élément de liaison (1) en adaptation à la longueur des vis de liaison utilisées,
**caractérisé en ce que** l'élément de liaison (1) dépasse alors la surface d'about et repose, avec la partie qui dépasse, sur ladite zone de surface alignée, décrite plus haut, de la seconde poutre (4).

2. Dispositif auxiliaire selon la revendication 1, **caractérisé en ce que** la position de l'élément de liaison (1) au contact de la surface d'about est définie par une ligne (1.1) qui figure sur l'élément de liaison et qui passe dans cette position définie au niveau de la surface d'about.

3. Dispositif auxiliaire selon la revendication 1 ou 2, **caractérisé en ce que** l'élément de liaison (1) et l'élément de perçage (2) peuvent être reliés l'un à l'autre au moyen d'une connexion amovible, deux paires d'éléments de connexion complémentaires (1.4, 2.4) ayant une action conjointe, étant respectivement disposés tous deux à l'état fermé au niveau de la surface d'about.

4. Dispositif auxiliaire selon la revendication 3, **caractérisé en ce qu'**un groupe d'éléments de connexion de même type (2.4) est disposé l'un derrière l'autre dans une rangée qui défile sur l'élément de perçage dans le sens normal vers la surface d'about.

5. Dispositif auxiliaire selon l'une des revendications précitées, **caractérisé en ce que** la partie de l'élément de liaison (1) partant de la première poutre (3) pour dépasser la seconde poutre (4) est pourvu de part en part d'un perçage (1.3), dont la prolongation passe au départ de l'élément de liaison (1) dans la seconde poutre (4) en s'écartant tant de la surface sur laquelle l'élément de liaison repose que de la surface d'about.

6. Dispositif auxiliaire selon l'une des revendications précitées, **caractérisé en ce que** deux douilles de guidage (2.5) sont montées sur l'élément de perçage (2) et que l'entraxe des deux douilles de guidage (2.5) sur l'élément de perçage (2) l'une par rapport à l'autre dans le sens qui est parallèle au bord entre les surfaces d'about des poutres (3,4) et la surface d'appui pour l'élément de liaison (1) correspond à la moitié de la largeur de l'élément de liaison (1) dans ce sens.

7. Dispositif auxiliaire selon la revendication 6, **caractérisé en ce que** lorsque l'élément de perçage (2) est monté sur l'élément de liaison (1) dans la direction parallèle au bord entre les surfaces d'about des poutres (3, 4) et la surface de contact de l'élément de liaison (1), l'écart entre une face latérale de l'élément de liaison (1) et l'axe d'une douille de guidage (2.5) est d'un huitième de la largeur de l'élément de liaison.
